# EUROPEAN PATENT APPLICATION

(11) **EP 2 485 077 A1**
(43) Date of publication of application: **08.08.2012**
(21) Application number: 12153783.1
(22) Date of filing: 03.02.2012
(51) Int. Cl.: G02B 6/44

(54) **Optical telecommunication cable and method for installing an optical communication cable**

(30) Priority: 08.02.2011 NL 2006159
(71) Applicant: B.V. Twentsche Kabelfabriek, 7481 KJ Haaksbergen (NL)
(72) Inventor: Janssen, Johannes Josephus Marie, 5941 AZ Velden (NL); Borgman, Martijn Gerardus Bernardus, 7491 GM Delden (NL)
(74) Representative: Luten, Martin Haaije

(57) **Abstract**

The invention relates to inter alia an optical telecommunication cable comprising at least one optical fibre for transmitting data, a sheath which encases the optical fibre, wherein the optical fibre is provided on at least one outer end thereof with a connector, wherein the optical fibre extends uninterruptedly, in particular without spliced joins, between the one outer end and the outer end provided with the connector.

## Description

The present invention relates to an optical telecommunication cable comprising at least one optical fibre for transmitting data and a sheath which encases the optical fibre. The invention also relates to a combination of an optical telecommunication cable and a packaging. The invention further relates to a method for laying an optical telecommunication cable between a node in a telecommunication network and a connection point and a method for installing an optical telecommunication network comprising at least one node and a plurality of connection points.

For the purpose of installing telecommunication networks, both inside a building or between buildings, frequent use is made of optical telecommunication cables for forming a glass fibre network. The bandwidth of these optical telecommunication networks is many times greater than the maximum attainable bandwidth in for instance networks based on electrical conduction.

A typical optical telecommunication cable or glass fibre cable is provided with an optical fibre for transmitting data, and preferably with a plurality thereof. These fibres can each be provided with a cladding for protection purposes. Furthermore, the optionally clad fibres are usually enclosed by a sheath or jacket for protection purposes.

In order to install a glass fibre network which extends to the buildings, for instance in the form of dwellings ("Fibre To The Home"), it is known to draw optical cables from a node or distribution point to the different buildings. From a large supply of optical telecommunication cable with lengths of up to 5 kilometres, a length is taken off which is then carried under the ground from the node to a connection point, i.e. the building. In the building a passage is arranged in the foundation, for instance by drilling, after which the optical cable can be carried through this passage into the building. A connector is then attached to the outer end of the optical cable by means of splicing. Such a connector or plug forms a connecting element for connecting, preferably by snapping, the optical cable (in)to communication equipment. The other outer end is also connected to the node, after which the building is connected to the glass fibre network.

The splicing of a connector to an optical cable is a time-consuming and critical operation. Particularly the alignment of the fibre(s) of the cable with the fibre(s) of the connector ("pigtail") requires high precision, and it has therefore been found that a not inconsiderable number of the thus created connections do not function, or do not function satisfactorily.

It is therefore an object, among others, to provide an optical telecommunication cable which can be used in efficient and/or simple manner in the installation of an optical telecommunication network.

This and other objects are achieved by the optical telecommunication cable as according to claim 1.

This and other objects are more particularly achieved by an optical telecommunication cable comprising at least one optical fibre for transmitting data, a sheath which encases the optical fibre, wherein the optical fibre is provided on at least one outer end thereof with a connector, wherein the optical fibre extends uninterruptedly between the one outer end and the outer end provided with the connector.

According to the invention an optical telecommunication cable is provided which is already provided with a suitable connector for connecting the telecommunication cable to telecommunication equipment. It is then no longer necessary when installing the network for a connector to be arranged on an outer end using splicing, whereby possible errors occurring here are also avoided. One outer end is preferably provided with a connector, although it is also possible for both outer ends to be already provided with a suitable connector.

The connector is arranged here on an outer end of the optical fibre in the factory so that high accuracy can be guaranteed. The fibre in the optical cable runs uninterruptedly here between the one outer end and the connector, and is preferably not provided here with a spliced join as in the case of a cable installed according to the known method for connection to a connection point.

The connector can be any type of connector suitable for connection to communication equipment such as a modem or a distribution station. The diameter of the connector is preferably less than 18 mm, more preferably less than 14 mm. This makes it possible to carry the connector through a drilled hole. The connector more preferably comprises a connector of the SC type.

The telecommunication cable preferably has a diameter of 4-8 mm.

According to a preferred embodiment, the telecommunication cable comprises a direct-buried telecommunication cable. The cable is adapted here to be arranged directly in the ground, i.e. without further protection in the form of for instance a tube. The glass fibre cable preferably takes a metal-free form here and is preferably longitudinally watertight. The cable is also able to withstand normal ambient temperatures, more preferably within a range of -30°C to 70°C. The sheath, in this case in the form of an outer jacket, is preferably manufactured from a wear-resistant plastic, preferably polypropylene, polyethylene, polyamide etc. The sheath is moreover preferably provided with a reinforcing element, and preferably two, manufactured from a relatively stiff material, for instance GRP (Glass Reinforced Polymer). It is also advantageous for the cable to be provided with pull relief, for instance in the form of coaxially arranged reinforcing fibres, manufactured for instance from glass thread or aramid.

The cable can be a loose-tube cable here, wherein the optical fibre, or plurality of fibres, is held in a tube. The fibre extends to some extent in spiral form in the tube here so that possible stretching of the cable can be compensated. The tube is preferably filled with a gel. The reinforcing fibres can then be arranged round the tube with the fibres. The outer jacket can then be arranged therearound, optionally provided with reinforcing elements.

According to a further preferred embodiment, the optical fibre comprises a single-mode optical fibre. It is moreover advantageous for the optical fibre to be provided with a plurality of optical fibres, preferably two or more optical fibres.

According to a further preferred embodiment of the optical telecommunication cable according to the invention, the cable comprises a protective sleeve extending from the sheath round the connector and enclosing it watertightly. The protective sleeve, which preferably takes a tubular form, extends round the connector here to protect and preferably seal it watertightly. Preferably provided for this purpose is a seal which extends between the sheath of the cable and the protective sleeve on a first side of this protective sleeve, and a second seal is moreover preferably provided which extends beyond the connector at the other end of the protective sleeve. The seals can for instance be arranged using a clamping sleeve.

The protective sleeve makes it possible to use the cable provided with the connector in wet conditions or even under water. Not only does this make storage of the optical cables on site easier, it is moreover possible to bury the optical telecommunication cable according to the invention close to a building without the cable and the connector being damaged. The protective sleeve also provides protection to the connector, for instance during laying of the optical cable. The protective sleeve preferably comprises a tube manufactured from a stiff plastic so as to prevent kinking of the fibre with the connector held therein.

The protective sleeve is preferably manufactured at least partially from a translucent material, more preferably at least at the position of the connector. This makes it possible to test the optical cable without having to remove the protective sleeve. Testing can take place by placing a test lamp at the other outer end of the optical cable. For this purpose the protective sleeve is preferably translucent such that the connector, particularly an optical signal therefrom, is visible from outside the protective sleeve. Testing must in this respect be understood to mean testing of the optical transmission through the cable.

It is also advantageous for the cable, the connector and the protective sleeve to have a diameter smaller than the size of a drilled hole which can be made using conventional portable drills, in particular a diameter smaller than or equal to 18 mm, preferably 14 mm. This enables the optical cable provided with the protective sleeve to be carried efficiently into a building. It is then not necessary to remove the protective sleeve in order to draw the cable into the building. The protective sleeve can also be of use in a building, particularly when the hole is arranged in the foundation, wherein the cable is carried into a moist space.

When the optical telecommunication cable is provided with a plurality of optical fibres and the same number of connectors connected thereto, these connectors preferably extend in line with each other. The optical fibres connected to the connectors have for this purpose differing lengths. This makes a reduced diameter possible, so that they can for instance be held easily in the protective sleeve. Each of the connectors is enclosed here by the protective sleeve.

According to a further preferred embodiment, the optical fibre, preferably provided with a cladding, extends beyond the sheath as seen in the longitudinal direction of the cable. The optical fibre, preferably clad, then lies free of the jacket. In the case of a plurality of optical fibres, the optical fibres preferably extend beyond the jacket with differing lengths such that the connectors extend mutually in line. This is particularly advantageous when a protective sleeve is provided.

According to a further preferred embodiment of the optical telecommunication cable according to the invention, the telecommunication cable has a length of up to 300 metres, preferably less than 250 metres, and more preferably less than 200 metres. Since the distance between a node in the glass fibre network and a dwelling or building is typically no greater than this distance, the telecommunication cable can be used efficiently for connection thereof to the network. Other than in the known manner of connecting dwellings, wherein a very long supply is used to produce lengths of cable, use is made according to the invention of prefabricated telecommunication cables with connectors of a predetermined length.

The invention also relates to a combination of an optical telecommunication cable according to the invention and a packaging, wherein the packaging preferably comprises a reel holding a length of the optical telecommunication cable. Using the packaging, the telecommunication cable can then be easily transported and used on site. The packaging preferably comprises a reel which can be disassembled into two parts after use, wherein the two parts can be nested together for simple storage thereof. Since with the telecommunication cable according to the invention a new telecommunication cable with packaging must be used for each connection, the number of packagings used on site will increase. The storage space required is however limited by sliding the two, preferably symmetrically formed parts into each other. It is moreover advantageous for the packaging, for instance in the form of a reel, to be provided with a clamp for clampingly holding a protective sleeve and/or the connector which is arranged on an outer end of the telecommunication cable.

According to a further preferred embodiment, at least one of the optical telecommunication cable and the packaging is provided with location marking means such as a transmitter, preferably a transponder, adapted to determine the location thereof. When the telecommunication cable, preferably provided with the above described protective sleeve, is buried in the ground, it can be easily found again using the location marking means. These means preferably comprise a passive transmitter or a transponder, such as an RFID chip. Using a suitable detector, the cable can then be found in the case the cable must be connected after all. It is also possible for the packaging to be provided with the location marking means. In this case the packaging, or a part thereof, is buried with the cable. The packaging, for instance in the form of a reel, then serves at the same time as protection for the buried cable.

The invention further relates to a packaging, such as a reel, provided with location marking means. The invention also relates to a packaging, for instance in the form of a reel, provided with a clamp for holding a connector and/or a protective sleeve of the communication cable according to the invention. Such packagings are highly suitable for use with the telecommunication cable according to the invention.

The invention further relates to a combination with an optical telecommunication cable according to the invention and a shaping device for substantially straightening the optical telecommunication cable according to the invention, wherein the shaping device comprises a plurality of rollers which are arranged offset relative to a central axis for the purpose of guiding the cable in meandering manner over the rollers. Since the lengths of cable used according to the invention are smaller than in the known method, the bending radii when packed will also be smaller. This makes laying the cable more difficult, since the cable tends to return to this rolled-up state during laying. A shaping device is therefore provided for this purpose which is adapted to at least substantially erase the shape memory in the telecommunication cable according to the invention. Such a device is provided for this purpose with a plurality of rollers, preferably at least three, which are arranged offset in at least one plane relative to a central axis. The cable can then be carried onto the rollers and will then be guided in meandering manner over a part of the peripheries of the rollers. The cable rolls here over the peripheral parts of the rollers close to the central axis. The rollers are placed relative to each other such that the maximum bending of a guided cable will not exceed the maximum bending radius of this cable. During laying the cable is pulled through the shaping device, after which the cable will be almost straight and is therefore easy to install. The invention also relates to a shaping device as such, and can therefore also be used for cables other than the telecommunication cables according to the invention. The invention therefore moreover relates to the use of the shaping device in the laying of cables, preferably on site.

The invention also relates to a method for producing a telecommunication cable according to the invention, comprising the steps of providing a length of telecommunication cable and connecting a connector to a fibre of the cable, wherein the fibre runs uninterruptedly from an outer end of the cable to the connector. The method preferably also comprises of arranging a protective sleeve and/or packaging the telecommunication cable.

The invention further relates to a method for laying an optical telecommunication cable between a node in a telecommunication network and a connection point, comprising the steps of:
- providing a telecommunication cable according to the invention;
- guiding the telecommunication cable between the node and the connection point, wherein the outer end provided with the connector extends in the direction of the connection point; and
- connecting the other outer end of the telecommunication cable to the node.

When a connection point is connected to a node, or for instance another connection point, use is made according to the invention of a telecommunication cable already provided with a suitable connector. A possibly bad spliced connection between a connector and a cable as occurs frequently in the known methods is hereby avoided. The connection of the other outer end to the node preferably takes place by splicing. However, since a plurality of cables is preferably connected to the node, a skilled specialist can be employed centrally here to make these connections, while the work on the connection points requires less precision since splicing is no longer necessary there. It is also possible for the other outer end to also be provided with a connector.

According to a preferred embodiment of the method, providing the telecommunication cable comprises of providing a telecommunication cable with a length of less than 300 metres, preferably less than 250 metres and more preferably less than 200 metres. When a connection point is connected to a node, use is made of relatively short cables compared to the long cables normally used on site.

According to a preferred embodiment, the connection point comprises a building such as a dwelling, wherein the node extends to a distance outside the building, wherein the guiding comprises of guiding the telecommunication cable at least partially underground from the node to the connection point. The node or distribution point is generally situated centrally in a neighbourhood, and the different buildings or dwellings are connected from this point. Such a node is already connected to a glass fibre network so that, by connecting the dwellings and/or buildings using the telecommunication cable, they are directly connected to this glass fibre network. The connection point can for instance comprise telecommunication equipment arranged in the dwelling and/or the building. It is for instance possible here to envisage a modem. The connector is adapted here to co-act with this equipment. A node can also comprise suitable communication equipment in order to enable connection to a plurality of connections. It is possible for the node to comprise a passive node, embodied for instance in a bush.

In order to connect the buildings to the node, trenches are preferably dug in the ground, after which the cable according to the invention is arranged in the trench. The cable is preferably arranged directly in the trench without any form of additional protection being necessary. This enables an efficient connection. After arranging of the cable the trench can then be filled. The cable preferably runs wholly underground between the node and the end point, for instance the building.

The method can moreover comprise the step of providing a passage, preferably below ground level, for the telecommunication cable in the building, wherein the guiding also comprises of guiding the outer end with the connector of the telecommunication cables through the passage into the building. In this case the cable is guided into the building or dwelling. The cable is then preferably connected immediately to the telecommunication equipment present there. When the cable is provided with a protective sleeve as described above, this sleeve is first removed. This can for instance be done by cutting through the clamping rings as described above. It is however also possible for the cable not to be connected in the dwelling or the building because for instance no suitable equipment is as yet present. In this case it is recommended to leave the possible protective sleeve in place so as to prevent possible deterioration of the connector and/or the cable.

Providing the passage preferably comprises of drilling a hole using a drill, such as a hammer drill. Since the cable and preferably also the protective sleeve have a maximum diameter smaller than the maximum feasible diameter of a drilled hole, the cable with connector and optionally with protective sleeve can be easily guided through this hole. Use need not therefore be made of heavy equipment in order to create the passage.

It is however also possible that the guiding comprises of guiding the telecommunication cable, preferably provided with the protective sleeve, to a position close to the building, for instance up to the plot of land or site of the building, and wherein the method also comprises the step of burying the telecommunication cable with connector at that position. If the user of a building, for instance the occupant of a dwelling, does not wish his dwelling/building to be connected to the glass fibre network, it is possible to opt to lay a glass fibre cable up to the plot of land or site. It is also possible to lay the cable up to a position close to the dwelling/building without carrying the cable into it. For this purpose the cable provided with the connector can be buried in the ground for later connection. The cable is preferably provided for this purpose with the above described protective sleeve so that deterioration of the connector and the cable is prevented.

The location of the buried telecommunication cable, in particular the connector thereof, is preferably marked here using a transmitter, preferably a transponder. This makes it possible to easily find the cable again, for instance for connection at a later stage.

According to a further preferred embodiment, the method further comprises the step of guiding the telecommunication cable along a plurality of rollers arranged offset relative to a central axis for guiding the cable in meandering manner over the rollers in order to make it at least substantially straight. This facilitates laying of the cable since after this step it is almost straight.

The invention further relates to a method for installing an optical telecommunication network, comprising at least one node and a plurality of connection points, wherein the method comprises the steps of:
- providing a plurality of optical telecommunication cables according to the invention; and
- guiding the optical communication cables between each of the connection points and the node according to the invention.

According to the method use is made of a prefabricated cable provided with connector for the purpose of connecting each of the connection points.

The present invention is further illustrated with reference to the following figures, which show a preferred embodiment of the cable and method according to the invention and are not intended to limit the scope of the invention in any way, and in which:
Figure 1 shows a schematic view of a glass fibre cable;
Figures 2a and 2b show respectively schematic perspective and cross-sectional views of the protective sleeve;
Figure 3 shows schematically a reel with the cable;
Figures 4a-d show schematically the connection of a dwelling to a glass fibre network; and
Figure 5 shows schematically a cable roller according to the invention.

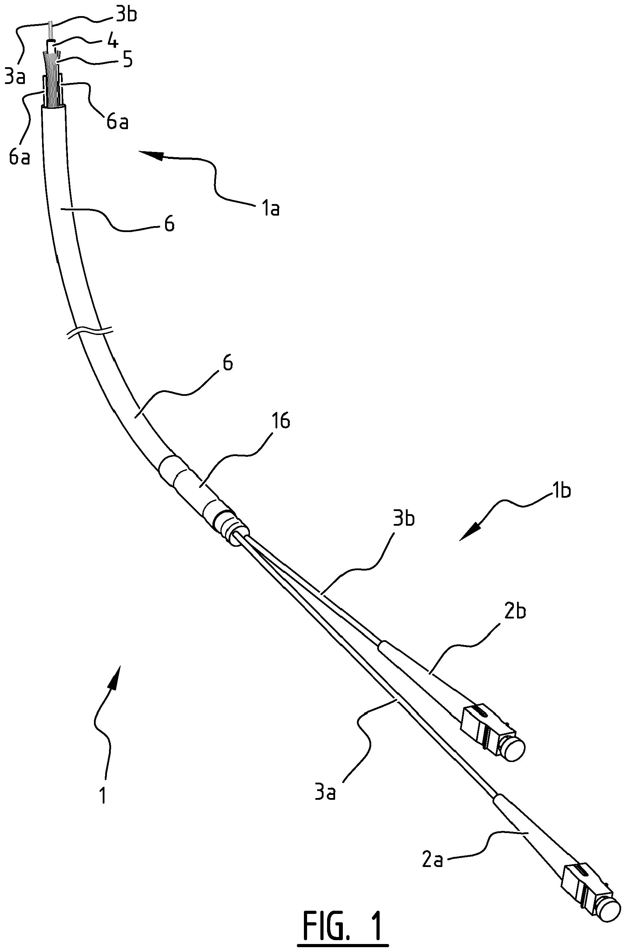

Figure 1 shows a direct access cable (DAC) 1 according to the invention. The cable is shown in exploded view at outer end la. Cable 1 is provided with two optical fibres 3a and 3b held in a tube 4. Tube 4 is filled with a gel. Present round tube 4 is a layer of aramid fibres 5 which provide for pull relief. Subsequently arranged therearound is a sheath in the form of an outer jacket 6, in which two reinforcing elements 6a and 6b are arranged. The outer jacket is manufactured from polypropylene and the reinforcing elements are manufactured from GRP. Glass fibres 3a and 3b are single-mode glass fibres which are able to communicate in accordance with the G.657.A1 protocol.

The other outer end 1b is provided here with two connectors 2a and 2b which are connected to the respective glass fibres 3a and 3b, which are provided on this outer end with claddings. Glass fibres 3a and 3b extend uninterruptedly here between connectors 2a and 2b and the other outer end 1a. Connectors 2a and 2b are of the SC type and are arranged by clamping on fibres 3a and 3b. Fibres 3a and 3b with cladding extend here beyond jacket 6. Arranged at the position of the end of jacket 6 is a shrinking sleeve 16 which serves for pull relief.

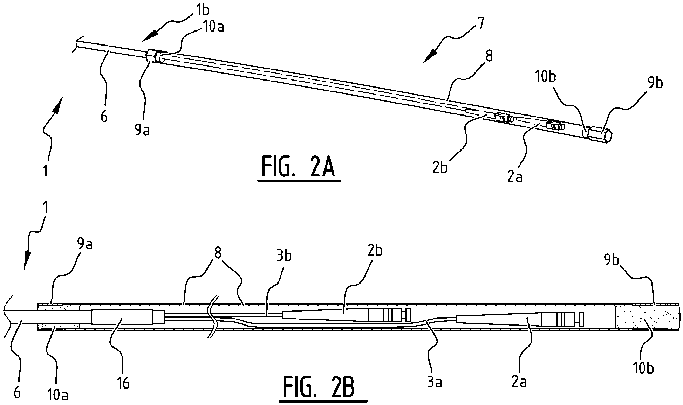

Figures 2a and 2b show a cable 1 with a protective sleeve 7 according to the invention. Arranged on outer end 1b provided with connectors 2a and 2b is a transparent polyethylene tube 8 which at the one outer end connects closely to outer jacket 6 of the cable using a silicone seal 10a. Tube 8 and seal 10a are held clampingly on outer jacket 6 by a clamping ring 9a. This seals the first outer end of protective sleeve 7 watertightly. Placed at the other outer end of tube 8 is a second silicone seal 10b which is fixedly connected using a clamping ring 9b. As shown in the figures, connectors 2a and 2b extend in line with each other so that the diameter of tube 8 can be limited and in this example is 12 mm. The outer diameter of cable 1 is in this respect nominally 5.9 mm.

Since tube 8 is translucent, the cable can be tested by arranging a lamp on the outer end 1a without protective sleeve 7 having to be removed. It is more particularly possible to see from outside tube 8 whether connectors 2a and 2b receive light signals when a light is shone onto the other outer ends of the optical fibres. Connectors 2a and 2b and tube 8 extend for this purpose such that connectors 2a and 2b, particularly optical signals therefrom, are visible from outside so that tube 8 need not be removed in order to test the cable.

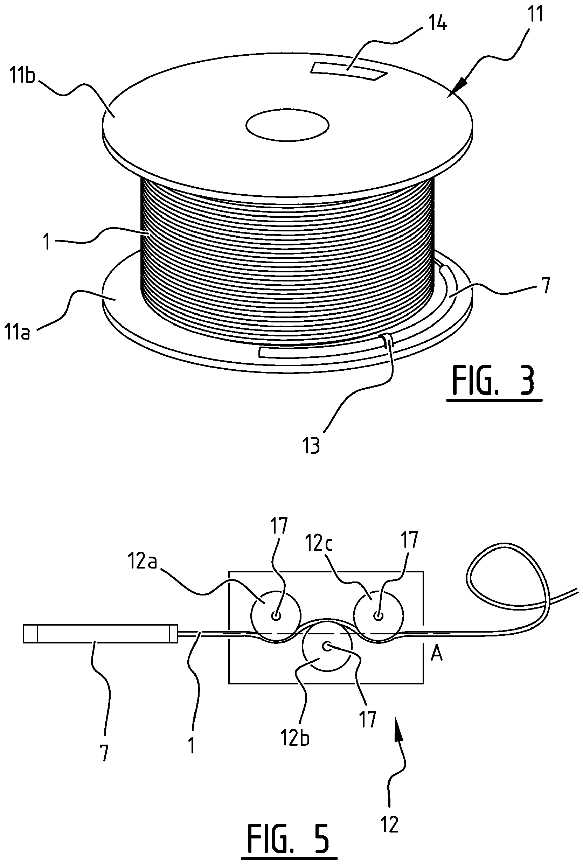

Figure 3 shows a reel 11 on which a length of 200 m of cable 1 is arranged. Arranged once again on outer end 1b is a protective sleeve 7 which is clamped to a first part 11a of reel 11 using a clamp 13. A second part 11b of the reel is provided here with an RFID chip 14 which will be described in more detail below.

Parts 11a and 11b are releasable and symmetrical relative to each other in the released state. Once cable 1 has been used, reel 11 can be taken apart and the parts 11a and 11b can be nested together in order to save space on site.

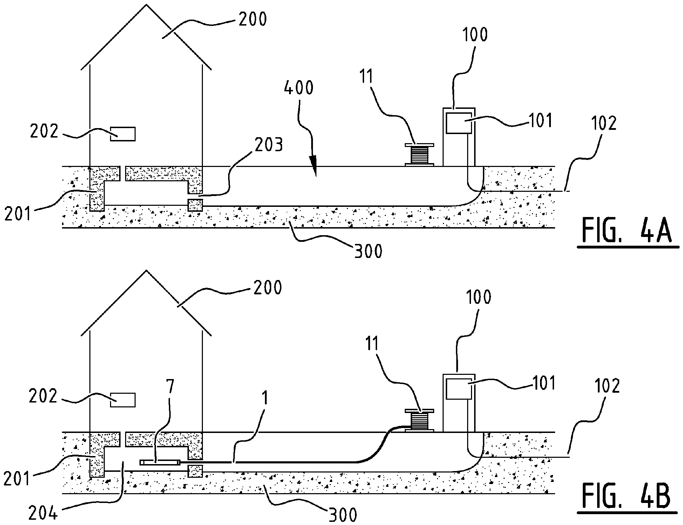

Connection of a dwelling to a glass fibre network 102 will be further elucidated with reference to figures 4a-d. Shown in these figures is a dwelling 200 which is provided with a modem 202 which has to be connected to a distribution station 101 of a node 100 in the form of a distribution point, which can be both above ground and below ground. Distribution station 101 is connected to a glass fibre network 102, for instance to an internet service provider or the like. The distance between distribution point 100 and the dwelling is in this example 150 m.

In order to connect dwelling 200 a trench 400 is dug in the ground 300 between distribution point 100 and dwelling 200. Trench 400 has a depth here of 80 cm. Below ground level a hole 203 with a diameter of 14 mm is drilled into the foundation 201 of dwelling 200 using a conventional hammer drill. Hole 203 debouches here in trench 400.

Also shown is a reel 11 with a cable 1 having a length of 250 m. Cable 1 is in turn provided with a protective sleeve 7. In the step as shown in figure 4b, cable 1 is carried from distribution station 101, through passage 203 and to a crawl space 204 under dwelling 200. Since protective sleeve 7 has a diameter smaller than 14 mm, the cable with the protective sleeve can be carried easily through passage 203.

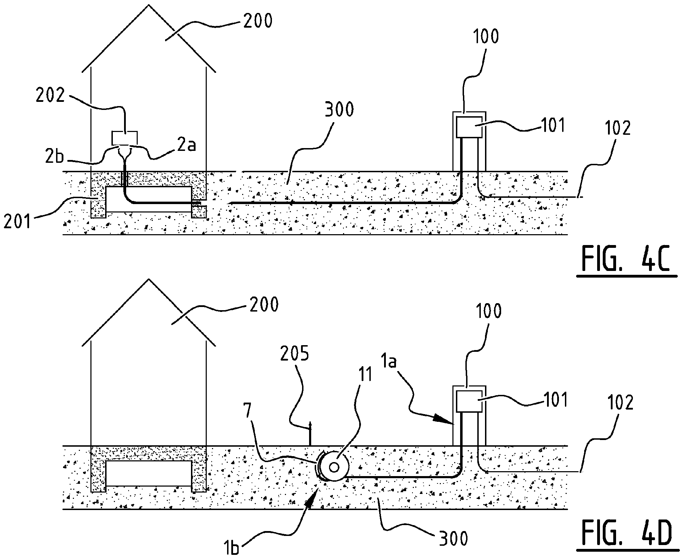

In a subsequent step, as shown in figure 4c, cable 1 can be connected with connectors 2a and 2b to modem 202. Clamping rings 9a and 9b as shown in figures 2a and 2b are for this purpose cut loose using pliers so that tube 8 can be easily released from outer end 1b, so that connectors 2a, 2b are left free for connection thereof. Trench 400 can then be filled.

It can however also be possible for the cable with protective tube 7 to remain in crawl space 204, for instance when dwelling 200 is not yet provided with suitable equipment 202. In this situation protective tube 7 also protects the cable, and particularly connectors 2a and 2b, from possible damp conditions in crawl space 204.

As stated, cable 1 has a length of 250 m, while the distance between dwelling 200 and distribution point 100 is only 150 m. The outer end 1a is cut here to the desired length, after which this outer end can be connected to distribution station 101.

Figure 4d shows yet another variant, wherein the outer end 1b with the connectors is buried in the ground 300. This can for instance occur when the occupant of dwelling 200 does not wish to be connected to glass fibre network 102. The cable is therefore buried here close to boundary partition 205 of the plot of land of dwelling 200. In this buried situation protective sleeve 7 again protects cable 1, and particularly connectors 2a and 2b thereof. In this example reel 11, which is provided with RFID chip 14, is also buried. Using a suitable detector the cable 1 with connectors 2a and 2b can then be found again at a later stage for possible connection. It will be apparent that, although cable 1 is buried close to boundary partition 205 here, the cable can be buried equally well at other locations, for instance closer to dwelling 200. As shown in figure 4d, the other outer end 1a of the cable is already connected to distribution station 101.

Finally, figure 5 shows a cable roller 12 which can be used to make cable 1, which tends to roll up again, more or less straight. Three rollers 12a-c are arranged on cable roller 12, wherein shafts 17 of the rollers are arranged offset relative to an axis A. Cable 1 is pulled through between the rollers so that the shape memory from the rolled-up state is erased.

The present invention is not limited to the shown embodiments but also extends to other embodiments falling within the scope of the appended claims. The invention can thus also be applied to install an optical network inside a building. It is moreover possible to apply the method to install an optical telecommunication cable between a first connection point and a second connection point, which in this case need not necessarily be a node. Nor is the invention limited to a determined type of node. The node can for instance also take the form of a bush, wherein the node is preferably passive. The node can for instance also comprise a POP ("point-of-presence") in the glass fibre network.

## Claims

1. Optical telecommunication cable comprising at least one optical fibre for transmitting data, a sheath which encases the optical fibre, wherein the optical fibre is provided on at least one outer end thereof with a connector, wherein the optical fibre extends uninterruptedly, in particular without spliced joins, between the one outer end and the outer end provided with the connector.

2. Optical telecommunication cable as claimed in claim 1, wherein the telecommunication cable comprises a direct-buried telecommunication cable.

3. Optical telecommunication cable as claimed in claim 1 or 2, wherein the optical fibre comprises a single-mode optical fibre.

4. Optical telecommunication cable as claimed in claim 1, 2 or 3, wherein the cable comprises a protective sleeve extending from the sheath round the connector and enclosing it watertightly, wherein the protective sleeve is manufactured at least partially from a translucent material for the purpose of testing the optical cable, preferably at least at the position of the connector.

5. Optical telecommunication cable as claimed in claim 4, wherein the protective sleeve has a diameter which is less than or equal to 14 mm.

6. Optical telecommunication cable as claimed in any of the foregoing claims, wherein the telecommunication cable has a length of less than 300 metres, preferably less than 250 metres, and more preferably less than 200 metres.

7. Combination of an optical telecommunication cable as claimed in any of the foregoing claims and a packaging, wherein the packaging comprises a reel holding a length of the optical telecommunication cable.

8. Optical telecommunication cable or combination of optical telecommunication cable with packaging as claimed in any of the foregoing claims, wherein at least one of the optical telecommunication cable and the packaging is provided with location marking means such as a transmitter, preferably a transponder, adapted to determine the location thereof.

9. Combination with an optical telecommunication cable as claimed in any of the foregoing claims and a shaping device for substantially straightening the optical telecommunication cable according to any of the foregoing claims, wherein the shaping device comprises a plurality of rollers which are arranged offset relative to a central axis for the purpose of guiding the cable in meandering manner over the rollers.

10. Method for laying an optical telecommunication cable between a node in a telecommunication network and a connection point, comprising the steps of:
- providing a telecommunication cable as claimed in any of the foregoing claims;
- guiding the telecommunication cable between the node and the connection point, wherein the outer end provided with the connector extends in the direction of the connection point; and
- connecting the other outer end of the telecommunication cable to the node.

11. Method as claimed in claim 10, wherein providing the telecommunication cable comprises of providing a telecommunication cable with a length of less than 300 metres, preferably less than 250 metres and more preferably less than 200 metres.

12. Method as claimed in claim 10 or 11, wherein the connection point comprises a building such as a dwelling, wherein the node extends to a distance outside the building, wherein the guiding comprises of guiding the telecommunication cable at least partially underground from the node to the connection point.

13. Method as claimed in claim 12, also comprising the step of providing a passage below ground level for the telecommunication cable in the building, wherein the guiding also comprises of guiding the outer end with the connector of the telecommunication cable through the passage into the building, wherein providing the passage comprises of drilling a hole using a drill, such as a hammer drill.

14. Method as claimed in claim 12, wherein the guiding comprises of guiding the telecommunication cable, in particular as claimed in any one of the claims 4-5, to a position close to the building, for instance up to the plot of land or site of the building, and wherein the method also comprises the step of burying the telecommunication cable with connector at that position, and wherein the method preferably also comprises the step of marking the location of the buried telecommunication cable, in particular the connector thereof, using a transmitter, more preferably a transponder.

15. Method as claimed in any of the foregoing claims, further comprising the step of guiding the telecommunication cable along a plurality of rollers arranged offset relative to a central axis for guiding the cable in meandering manner over the rollers in order to make it at least substantially straight.

16. Method for installing an optical telecommunication network, comprising at least one node and a plurality of connection points, wherein the method comprises the steps of:
- providing a plurality of optical telecommunication cables according to any of the foregoing claims; and
- laying the optical communication cables between each of the connection points and the node according to any of the foregoing claims.
